(19) **Europäisches Patentamt / European Patent Office / Office européen des brevets**

(11) **EP 3 138 617 B1**

(12) **EUROPEAN PATENT SPECIFICATION**

(45) Date of publication and mention
of the grant of the patent:
**28.08.2019 Bulletin 2019/35**

(51) Int Cl.:
*B01D 19/00* (2006.01)     *H01M 8/18* (2006.01)
*H01M 8/04119* (2016.01)

(21) Application number: **16190007.1**

(22) Date of filing: **25.01.2013**

(54) **SEPARATOR**

ABSCHEIDER

SÉPARATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2012 GB 201201246**
**29.02.2012 GB 201203565**
**29.02.2012 GB 201203567**

(43) Date of publication of application:
**08.03.2017 Bulletin 2017/10**

(62) Document number(s) of the earlier application(s) in
accordance with Art. 76 EPC:
**13702098.8 / 2 806 960**

(73) Proprietor: **University of Chester**
**Chester CH1 4BJ (GB)**

(72) Inventors:
• **WARD, David**
**Runcorn, Cheshire WA7 4QX (GB)**
• **LONGMAN, Robert**
**Runcorn, Cheshire WA7 4QX (GB)**
• **CLARKSON, Brian**
**Runcorn, Cheshire WA7 4QX (GB)**
• **HINES, Michael**
**Runcorn, Cheshire WA7 4QX (GB)**

(74) Representative: **Potter, Julian Mark**
**WP Thompson**
**138 Fetter Lane**
**London EC4A 1BT (GB)**

(56) References cited:
**US-A- 1 718 013      US-A- 3 283 477**
**US-A1- 2005 247 198     US-A1- 2006 288 870**
**US-A1- 2007 231 657**

EP 3 138 617 B1

**Description**

The present invention generally relates to a separator device and method for separating gases and liquids and, more particularly, to a separator and method for separating the gas and liquid phases of a foam. The invention finds particular application in fuel cells, but may also be useful in other applications in which it is necessary or desirable to separate the gas and liquid phases of a foam.

The separation of the liquid and gas phases of foams is a well studied and reported area of research. Foams occur in industrial processes when gas becomes dissolved in a processing liquid. Normally the dissolved gas would behave as part of the processing liquid, however, the gas can come out of solution as small bubbles, for example, when there is a release of pressure. These bubbles rise to the surface of the liquid and collect as a foam.

The presence of foams in processing liquids can lead to a number of efficiency and performance problems in industrial processes and other applications. For example, foams result in reduced efficiency of equipment such as pumps, reduced capacity of pumps and storage tanks, reduced effectiveness of the fluid and drainage problems to name but a few.

There is often a need to remove foams from industrial processes to avoid the problems described above. This usually involves separating the gas phase from the liquid phase of the foam and, ideally, this needs to be done rapidly, efficiently and with minimum power consumption.

One method is to use mechanical separation devices such as hydro-cyclones and centrifuges. These techniques consume significant amounts of power which can be a problem in certain industries or applications, for example, portable or automotive applications. Another possibility is to use a helical separator technology, such as that described in the applicant's co-pending patent application GB1201246.4, which utilises enhanced gravitational force to effect mechanical separation at lower power. However, there is an ever present requirement to improve separation efficiency at reduced power and in a smaller physical volume. To achieve this, it is not possible to rely solely on mechanical separation.

An energy efficient alternative to mechanical separation is to use antifoam. The action of antifoam in the disruption of liquid films and bubbles is well known and exploited. The mechanisms of antifoam in the disruption of a foam interface, i.e. the interface between the gas and liquid phases, are varied, depending on the formulation and form of the antifoam. However, it can generally be described by the interaction of a low surface energy or hydrophobic surface with the liquid film.

Generally antifoam agents take the form of particles having a low surface energy or hydrophobic surface. Such low surface energy surfaces can be created by forming the particles from or coating the particles with a low surface energy or hydrophobic material. Examples of such materials from which the particles may be formed or coated include polytetrafluoroethylene (PTFE), halogenated organic polymers, silicone polymers and hydrocarbon polymers such as polythene and polypropylene. PTFE, having a surface energy of approximately 20 mJ/m$^2$, is a very effective hydrophobic material, although any suitable hydrophobic material may be used.

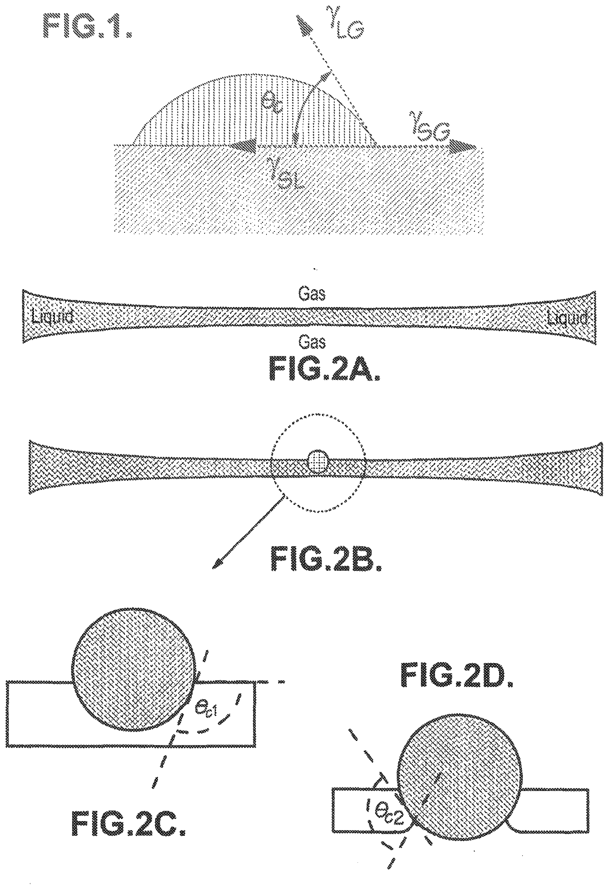

A low surface energy or hydrophobic particle at the interface of an aqueous foam film will rest such that the contact angle will satisfy Young's equation, as seen in Figure 1 and which can be expressed as:

$$\gamma_{SL} + \gamma_{LG}\cos(\theta_c) = \gamma_{SG} \qquad \text{Formula (1)}$$

Where $\gamma_{SL}$, $\gamma_{LG}$ and $\gamma_{SG}$ are the interfacial tensions between the solid and the liquid, the liquid and the gas and the solid and the gas respectively and $\theta_c$ is the contact angle.

Foams consist of a large number of bubbles. Each bubble has a liquid film having two surfaces each of which is a gas-liquid interface as shown in Figure 2A. Figure 2B shows an antifoam particle sitting in a liquid film. Hydrophobic antifoam forms a contact angle of >90° with the liquid film as shown in Figure 2C. A contact angle of >90° forms with the liquid at both surfaces of the film as shown in Figure 2D. Due to the hydrophobic nature of the film, the particle de-wets the film and a hole forms, rupturing the film and causing the bubble to burst. The antifoam particle then drops under the action of gravity to the next interface and the process repeats itself. This is the general principle of how antifoam functions.

It is generally not possible to use antifoam as described above in industrial processes where foams are desirable or a necessary product of a particular process, for example, in aeration or oxidation processes. Foams are useful in such processes because they create a large surface area of liquid in contact with a gas which aids the absorption or solution of the gas in the liquid. The presence of an antifoam agent in such processes would be undesirable because it would prevent the formation of the foam. However, once the particular process involving the foam has completed, it may still be desirable to remove the foam prior to the next processing step. Therefore an alternative method of removal is required.

Devices for separating liquids in droplet or aerosol form from gas streams using hydrophobic separation surfaces are known. DE10323155A1 discloses a separator for the removal of liquid in droplet or aerosol form, from a gas stream, comprising a separation element located in a separation region. The element consists of a material with hydrophobic and nanostructure characteristics. Other documents disclosing separators are US2006/0288870A1, US2005/0247198A1, US1718013,US3283477 and US2007/0231657.

However, devices for separating the gas and liquid phases of a foam using a hydrophobic surface are not known. The invention concerns a gas-liquid separator system according to claim 1.

Thus according to a first aspect of the present invention, there is provided a separator for separating the gas and liquid phases of a foam, the separator comprising a first side and a second side and having through-flow means provided therein for permitting a foam or a foam phase to pass from the first side to the second side, the separator further comprising at least one foam contacting surface having a low surface energy, and means for recovering at least one separated foam phase from the foam.

It should be readily understood that the term 'foam' encompasses froth and can be fine (having small gas bubbles) or coarse (having larger gas bubbles) or a combination of foam having different-sized gas bubbles

Preferably, the separator comprises means for recovering at least a liquid phase from the foam, more preferably at least a liquid phase and a gas phase from the foam.

Generally, the separator of the invention will be provided as part of or in cooperative relationship with an industrial unit generating a foam comprising at least one useful and reusable component, there being provided means for supplying foam from the industrial unit to the separator, and means for recovering the at least one useful and reusable component and supplying the same to the or an alternative industrial unit.

In this document, in the context of a material or a surface, reference to low surface energy shall be taken to mean hydrophobic and vice versa. By low surface energy we preferably mean an energy of less than about 40 mJ/m$^2$, more preferably less than about 30 mJ/m$^2$ and even more preferably less than about 25 mJ/m$^2$.

The at least one foam contacting surface is preferably formed of one or more hydrophobic polymer materials. Such materials may for example be selected from polyolefins, polystyrenes, polyvinyls, polyvinylhalides, polyvinylidenehalides, polyhaloolefins, poly(meth)acrylates, polyesters, polyamides, polycarbonates, polyolefinoxides, polyesters and PEEKs.

More preferably, the one or more hydrophobic polymer materials may be selected from linear or branched polyethylene-linear, isotactic polypropylene, polyisobutylene, polystyrene, polymethylstyrene, polyvinyltoluene, polyvinyl fluoride, polyvinylidene fluoride, polytrifluoroethylene, polytetrafluoroethylene, polyvinylchloride, polyvinylidene chloride, polychlorotrifluoroethylene, polyvinylacetate, polymethylacrylate, polyethylacrylate, polymethylmethacrylate, polyethylmethacrylate, polybutylmethacrylate, polyisobutylmethacrylate, poly(t-butylmethacrylate), polyhexylmethacrylate, polyethyleneoxide, polytetramethylene oxide, Polytetrahydrofurane, polyethyleneterephthalate, polyamide-6,6, polyamide-12, polydimethylsiloxane, polycarbonate and polyetheretherketone. In particular, the one or more hydrophobic polymer materials may be selected from Table 1 which also lists the hydrophobic polymer materials' respective surface energies.

Table 1

| Polymer | Surface Energy [mJ/m$^2$] |
| --- | --- |
| Polyurethanes | 39.3 |
| Polyvinyl fluoride (PVF) | 38.6 |
| Nylon 12 | 38.2 |
| Polyvinyl acetate (PVA) | 37.7 |
| Polyethyl acrylate (PEA) | 37.0 |
| Polyethyl methacrylate(PEMA) | 35.9 |
| Polyethylene (PE) | 34.2 |
| Polyvinyl proprionate | 34.0 |
| Polyisobutylene | 33.6 |
| Polytetrahydrofuran (PTHF) | 31.9 |
| Polytetramethylene oxide | 31.9 |
| Polyvinyl butyrate | 31.1 |
| Polyvinyl hexadecanoate | 30.9 |
| Poly 2-ethylhexyl acrylate | 30.1 |

(continued)

| Polymer | Surface Energy [mJ/m$^2$] |
|---|---|
| Polypropylene (PP) | 30.1 |
| Poly(hexyl methacrylate) | 30.0 |
| Polyvinyl dodecanoate | 29.1 |
| Polyvinyl decanoate | 28.9 |
| Polyvinyl hexanoate | 28.9 |
| Polyvinyl octanoate | 28.7 |
| Polytrifluoroethylene | 27.5 |
| Polyacrylonitrile (PAN) | 27.4 |
| Polyvinyl butyral | 24.6 |
| Polymethacrylonitrile | 23.7 |
| Polytetrafluoroethylene(PTFE) | 22.2 |
| Polyetherimide (PEI) | 19.8 |
| Polyisoprene (PIP) | 18.4 |

Rather than use an antifoam agent such as hydrophobic particles, A separator unit according to the present invention comprises a low surface energy or hydrophobic foam contacting surface which exploits the same mechanism of foam disruption described above, rupturing the liquid/gas interfaces of the foam as it passes from the first side of the separator to the second side. The foam contacting surface may be formed from or coated with a low surface energy material, for example, PTFE, although any low surface energy or hydrophobic material may be used, as described above. The foam contacting surface may be a substrate or a plate over which or past which the foam or a liquid containing the foam flows. More than one foam contacting surface may be provided to increase the surface area in contact with the foam thereby enhancing foam disruption. The foam contacting surface or surfaces may be orientated parallel to or at an angle to the flow of the foam or the liquid containing the foam. The foam contacting surface or surfaces may be located in the region of the through-flow means.

In one preferred embodiment of a separator unit according to the present invention, the foam contacting surface and the through-flow means may be one and the same thing. In such an embodiment the foam contacting surface has holes therethrough which permit the foam or a phase thereof to pass from the first side of the separator to the second side. The holes increase the specific surface area of disruptive interface. As described above, the foam contacting surface may be formed from or coated with a low surface energy or hydrophobic material and more than one foam contacting surface may be provided.

A preferred foam contacting surface having holes therethrough could be a mesh or a perforated plate. Such a mesh or plate may be formed from or coated with a low surface energy or hydrophobic substrate or medium. Preferably, such a mesh would be formed of low surface energy or hydrophobic polymer filaments or the mesh may be formed of filaments of another material and coated with the low surface energy or hydrophobic material. The mesh or perforated plate hole size can vary in diameter from 0.1mm to 10mm, with the polymer filaments when present ranging from $50\mu m$ to 1mm in thickness. The disruptive interface phenomenon is enhanced when surface material has a low surface energy and a microfilament or rough finish at the length scale of the foam liquid film thickness.

The mesh or perforated plate, as appropriate, may be arranged in various configurations and at various orientations to the flow of foam. One or more layers may be provided perpendicular to, parallel to or at an angle to the flow. Alternatively a randomly packed configuration may be provided. In addition, a pleated pan fold arrangement may be provided either parallel to or at an angle to the flow. Furthermore, an annular fan fold configuration with combined flow flowing inside or outside the annular space may be provided.

When a foam is passed over the low surface energy surface or through the low surface energy mesh, the gas liquid interfaces of the foam are ruptured and the gas and liquid separate into a dense liquid phase and a gaseous phase. This phenomenon can also enhance separation in mechanical separation devices, such as hydro-cyclones, centrifuges or in the applicant's helical separator technology referred to above. To achieve this, the surfaces in contact with the foam in such devices are formed from materials having a low surface energy and/or a microfilament or rough finish at the length scale of the foam liquid film thickness. In addition, including a low surface energy mesh upstream or downstream of the mechanical separation devices enhances the separation of the gas and liquid phases.

According to another aspect of the present disclosure, there is also provided a method for separating the gas and liquid phases of a foam comprising: providing a separator unit in accordance with the invention; supplying a foam to the first side of the separator; passing the foam through the through-flow means towards the second side of the separator; and at or downstream from the second side of the separator, recovering at least one of a separated liquid phase of the foam and a separated gas phase of the foam.

The foam may be generated by an industrial unit and the at least one separated phase of the foam may be recovered and supplied to the or an alternative industrial unit.

The industrial unit may be a fuel or electrolysis cell.

Alternatively, the industrial unit may be a biochemical fermentation unit or froth floatation unit.

According to another aspect of the invention there is provided a foam reduction apparatus comprising a low surface energy material and means for contacting foam, when said foam is input to the foam reduction apparatus, along a surface of said low surface energy material.

At least a portion of the surface of said low surface energy material may be convex or pointed so that it is projecting away from other portions of the surface.

Such a portion of the surface of said low surface energy material may be formed by plural convex regions on the surface.

The portion may be formed by elongate strands of a mesh structure.

The surface, or surfaces, may be oriented at least partly parallel to a direction of flow of fluid past the surface(s).

The, or each, surface may comprise flexible material and may be held at or proximal to its/their upstream end(s), so as to inhibit movement of its upstream end whilst permitting lateral movement of a portion of the surface distal from its upstream end.

The surface may comprise a plurality of surfaces which are held in position proximal to one another so that they are at least partly parallel to one another and to the primary direction of fluid flow at their respective upstream ends.

The plurality of surfaces may be held in position so that they are spaced apart from one another in a direction transversal to the primary direction of fluid flow.

The plurality of surfaces may be attached to one another along an axis at least partly parallel to the primary direction of fluid flow and held in position so that they each extend from said axis radially outward from said axis.

A gas-liquid separating apparatus may be provided, comprising a separator according to the first aspect of the invention, and a foam reduction apparatus according to the other aspect of the invention.

A fuel cell system comprising a separator and/or a foam reducing apparatus as described herein may be used for the combined generation of heat and power, to provide motive power to a vehicle, or to generate power in an electronic apparatus, or any combination of two or more of such uses can be provided.

While the separator for separating the gas and liquid phases of a foam described hereinbefore has various applications, a particularly effective application is use of the separator in a catholyte regeneration system for a redox fuel cell, for example.

In an indirect or redox fuel cell, the oxidant (and/or fuel in some cases) is not reacted directly at the electrode but instead reacts with the reduced form (oxidized form for fuel) of a redox couple to oxidise it, and this oxidised species is fed to the cathode.

There are a number of constraints on this step of oxidising the redox couple. Oxidation of the redox couple should occur as rapidly as possible as a reduction in flow rate of the catholyte through the cathode will reduce the rate of energy production. The rate of energy production will also be reduced if oxidation of the redox couple is not as complete as possible, i.e. if a significant proportion of the redox couple remains unoxidised. The provision of apparatus which rapidly and completely oxidises redox couples present in catholyte solutions is made challenging by the need to ensure that the energy consumed when the oxidation step is taken is relatively low, otherwise the overall power generation performance of the fuel cell will be reduced. Additionally, the apparatus used to oxidise the redox couple should be as compact as possible, especially when the fuel cell is intended for use in portable or automotive applications.

The need to balance these conflicting requirements gives rise to inefficiencies in cell performance, particularly in automotive and electronic applications and in combined heat and power.

In operation of a redox fuel cell, the catholyte may be provided flowing in fluid communication with the cathode through the cathode region of the cell. The redox mediator couple is at least partially reduced at the cathode in operation of the cell, and at least partially re-generated (re-oxidised) by reaction with the oxidant after such reduction at the cathode. The at least partial regeneration of the redox mediator couple is effected in a regeneration zone.

The re-generation process typically requires the contacting of liquid catholyte with large volumes of air, greater than 4:1 on a volume basis (standard temperature and pressure) and up to 20:1 or greater. The interfacial area generated for mass transfer of oxygen from the air into the catholyte is in the form of high internal phase volume foam of small bubble radius. The rate of regeneration of the catholyte is proportional to the interfacial area for mass transfer. High rates of regeneration are required.

Once the catholyte has been regenerated the residual gases, mainly nitrogen, need to be removed from the catholyte before the catholyte is supplied to the fuel cell cathode. The catholyte must not contain gas bubbles or foam. Disengaging the "spent" gases must be done rapidly, efficiently and with minimal power consumption. As described above, mechanical separation, such as hydro-cyclones and centrifuges, may be used but these use an unacceptable amount of power especially when used in portable or automotive applications.

In redox fuel cell systems an antifoam agent cannot generally be added to the catholyte as there is a need to generate gas-liquid interfaces to promote oxidation. However, as described above, the mechanism of foam disruption can be exploited by passing the foam past a low surface energy or hydrophobic surface, such as PTFE, in order to rupture the foam interfaces.

Thus, according to another aspect, the present invention also contemplates a fuel cell comprising the separator unit of the invention located in a region of the cell adapted to regenerate by oxidation a redox couple useful in the cathode region of the cell.

Such a fuel cell may comprise: at least one membrane electrode assembly, the membrane electrode assembly comprising an anode and a cathode separated by an ion selective polymer electrolyte membrane; an anode chamber adjacent the anode of the membrane electrode assembly; a cathode chamber adjacent the cathode of the membrane electrode assembly; means for supplying a fuel to the anode chamber of the cell; means for supplying an oxidant to the cell; means for providing an electrical circuit between respective anodes and cathodes of the cell; a catholyte solution comprising at least one non-volatile catholyte component, the catholyte solution comprising a redox catalyst and/or mediator couple; means for contacting the redox catalyst and/or mediator couple with the oxidant to generate a foam comprising oxidised catalyst and/or mediator couple; and means for supplying the foam to the separator unit of the invention and recovering for further use at least the liquid phase of the foam.

The invention also contemplates the use of the separator according to any of the foregoing in separating the gas and liquid phases of a foam. Such a use may include supplying at least one useful separated phase from the foam to an industrial process, for example in a catholyte regeneration system of a redox fuel cell, or in separating hydrolysis gases from an electrolyte liquid.

By "cathode chamber" is meant that part of the cell bounded on one side by the cathode side of the membrane electrode assembly. Alternatively, or as well, the "cathode chamber" may be thought of as that part of the cell in which at least a part of the catholyte flowing therethrough in operation of the cell contacts the cathode side of the membrane electrode assembly.

Likewise, by "anode chamber" is meant that part of the cell bounded on one side by the anode side of the membrane electrode assembly.

Various embodiments of the present invention will now be more particularly described by way of example only, with reference to, and as shown in the accompanying drawings, in which:

| | |
|---|---|
| Figure 1 | is a schematic diagram illustrating Young's equation at a tertiary interface; |
| Figure 2A | is a schematic diagram showing the liquid film of a foam having two gas-liquid interfaces. |
| Figure 2B | is a schematic diagram showing a hydrophobic antifoam particle sitting in the liquid film of Figure 2A (PRIOR ART); |
| Figure 2C | is enlarged schematic view of the hydrophobic antifoam particle of Figure 2B showing the contact angle the particle has with the liquid film (PRIOR ART); |
| Figure 2D | is a further enlarged schematic view of the hydrophobic antifoam particle of Figure 2B showing the contact angle made with the other surface of the liquid film (PRIOR ART); |
| Figure 3 | is an embodiment of the present invention in the form of a schematic diagram; |
| Figure 4 | is a process flow diagram of redox fuel cell incorporating a separator in accordance with the present invention; |
| Figure 5 | is a photograph of a measuring cylinder containing catholyte foam which has over-filled the measuring cylinder; |
| Figure 6 | is a photograph of a PTFE knitted mesh as used in the present invention |
| Figure 7 | is a photograph of part of a measuring cylinder containing catholyte foam which uses the present invention. |
| Figures 8, 9 and 10 | are diagrams showing two small bubbles adjacent a low energy surface merging to form one larger bubble; |
| Figure 11 | shows a primary coalescer apparatus located within a pipe downstream from a gas-liquid contactor of a fuel cell system; |
| Figure 12 | shows a primary coalescer apparatus placed upstream of a secondary coalescer apparatus; |
| Figure 13 | shows a secondary coalescer apparatus in more detail; |
| Figure 14 | shows another primary coalescer apparatus different to that shown in FIG.12 |
| Figure 15 | shows a primary coalescer apparatus located within a pipe downstream from a gas-liquid contactor of a fuel cell system; |

| Figure 16 | shows operation of a flow field existing beneath the fluid-plunging inlet of a secondary coalesce device; and |
| Figures 17 and 18 | show detail of example mesh structures comprising surfaces having low surface energy. |

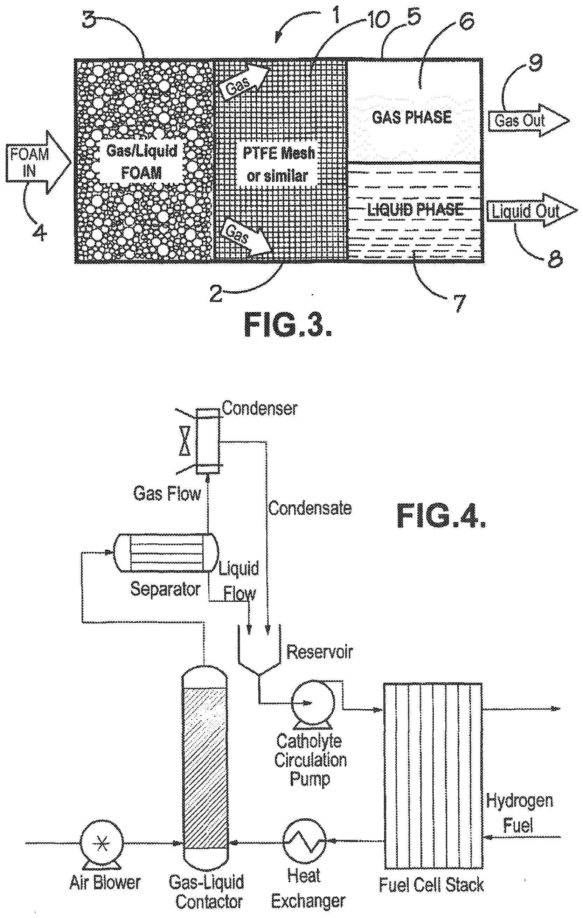

With reference to Figure 3, there is shown a separator 1 for separating the gas and liquid phases of a foam in accordance with the invention. The separator may be a tubular section or vessel and comprises three sections; a separation section 2, a feed section 3 and a collection section 5. The separation section has one or more low surface energy surfaces or meshes 10 for separating the gas and liquid phases of the foam via the mechanism described hereinbefore. The feed section is located upstream of and in fluid communication with the separation section and has at least one inlet 4 for receiving a foam or a liquid containing foam. The feed section distributes foam across the low surface energy surfaces or meshes. Downstream of and also in fluid communication with the separation section is a collection section 5 where the separated gas phase 6 and the separated liquid phase 7 collect. The collection section has one or more outlets 8 for the separated liquid phase and one or more outlets 9 for the separated gas phase 9.

The separation section 2 may comprise multiple low surface energy surfaces or meshes or mesh packing 10 so to increase the specific surface area of disruptive interface.

Although the separator is described as comprising three sections, such sections may not be distinct standalone sections. The sections may be integrated into a single continuous separator in which foam is received at one end and separated gas and liquid phases exit at the other. For example, the collection section 5 may be integral to the separation section 2 because as the gas and liquid phases are separated in the separation section, the denser liquid phase will tend to drop under gravity and collect at the bottom of the separation section, where it can be removed via outlet 8, and the lighter gas phase will tend to rise above the liquid phase and collect in the upper part of the separation section, where it can be removed via outlet 9. This characteristic of the gas and liquid phases is illustrated by the arrows in the separation section 2 in Figure 3.

In operation foam is supplied to the feed section 3 of the separator via inlet 4 as indicated by the leftmost arrow in Figure 3. In a catholyte regeneration system for a redox fuel cell the foam will be coming from the gas-liquid contactor section of the regenerator to the separator as shown in Figure 4. The foam may be fed into the separator by any suitable means, for example, under gravity or by a pump. The feed section then distributes the foam over the low surface energy surface or mesh 10 in the separation section 2. As the gas-liquid interfaces of the liquid films of the foam contact the low surface energy surface or mesh of the separation zone they are ruptured via the mechanism described hereinbefore and the foam is separated into a gas phase and a liquid phase as it passes through the separation zone. As described above the liquid phase will tend to collect at the bottom of the separator in the collection section 5 where it is removed from the separator via outlet 8 and returned to the process. In a catholyte regeneration system the separated catholyte liquid would be returned to the cathode region of the fuel cell. The gas will tend to collect in the upper part of the separator in the collection section where it is removed via outlet 9. The arrows in Figure 3 show the direction of flow through the separator.

The separator may be a standalone separator or module. Alternatively, it may be integrated into another device to enhance its performance, for example, a mechanical separation device as described hereinbefore.

## Examples

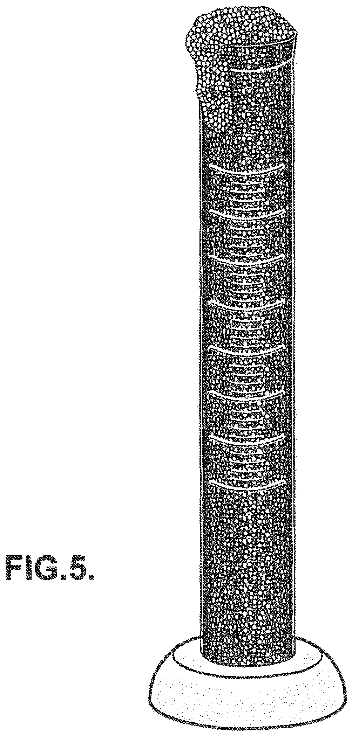

The practical embodiment of this disclosure was tested by placing 10ml of the Applicant's FlowCath® catholyte liquid in a measuring cylinder and passing a flow of air at a flow rate of 0.5 l/min through the catholyte using a ROBU® sintered glass sparge (product no. 18143) to form a foam. As can be seen from Figure 5, the foam formed over-filled the measuring cylinder.

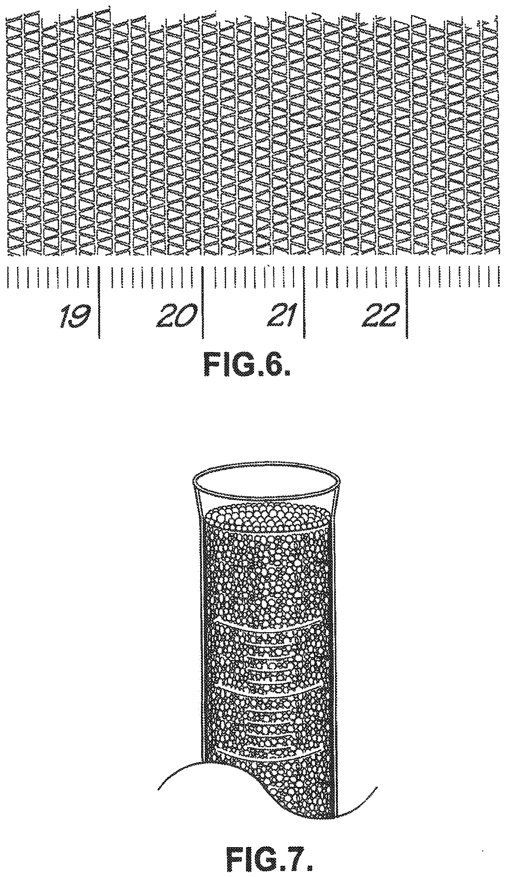

The test was repeated and a PTFE knitted mesh (Textile Development Associates, Inc., product no. PTFEKM22001), as shown in Figure 6 was placed in the throat of the measuring cylinder, as shown in Figure 7. Air was once again passed through the catholyte liquid under the same conditions. As can be seen from Figure 7, the effect of this was to rupture the foam and separate the gas and liquid phases.

There will now be described further aspects and embodiments of the invention relating to recent investigations and experiments by the inventors concerning the use of LEM-assisted foam disruption.

A general principle of foam disruption (destruction or breakdown of froth or foam) using Low Energy Material (LEM), typically comprising a mesh will now be explained. Although the performance of meshes have been demonstrated, structures other than meshes should give similar results (i.e. any other matrix of exposed LEM surface - e.g. multiple stands, fibrous mass, solid foam or sintered mass).

Effective gas-liquid separation, when used as part of a fuel cell system, acts to prevent:

i) gas carry-under to the liquid electrolyte (catholyte) pumps and the fuel cell stack and,

ii) liquid carry-over to the gas exhaust (output) of the stack.

In order to minimise both parasitic load (power consumed by the gas-liquid separation reactor) and gas-liquid separation reactor size, this operation must be accomplished with optimum energy and volume efficiency (i.e. using a small gas-liquid separation reactor which consumes little power). Investigations by the applicant have indicated that PTFE meshes are effective in collapsing V4 POM froth or foam. PTFE is a low surface energy material (LEM) and is therefore highly hydrophobic and thus water repelling (having surface energy of around 18 mJ/m$^2$ at 20°C).

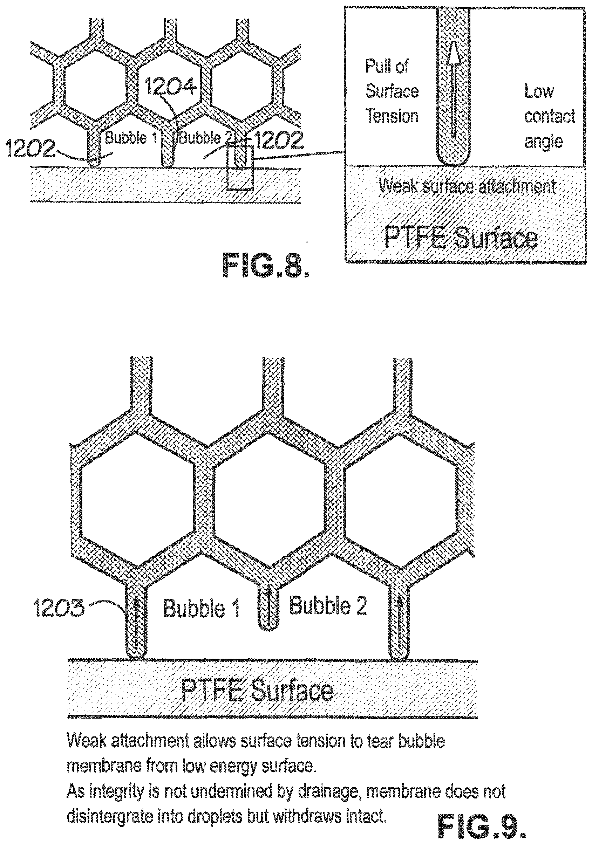

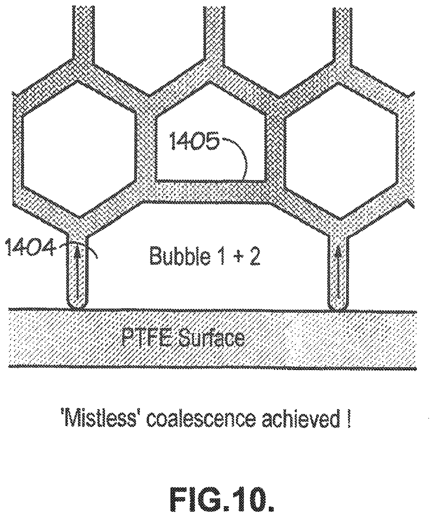

If exposed to an aqueous frothy mixture, the low surface energy material selectively repels the liquid phase. This has the effect of thinning the liquid boundary between bubbles of the foam (the liquid bubble-to-bubble boundary) at the point of contact of the bubbles with the LEM surface, promoting rupture and thereby coalescence of the bubbles i.e. merging or agglomerating of small bubbles into fewer larger bubbles. In the merging process a plurality of bubbles merges or coalesces to form one single bubble, this occurring for multiple groups of bubbles. FIGs 8 to 10 show two small bubbles 1202 merging to form one larger bubble 1404. The membrane portion 1204 joining the two smaller bubbles 1202 retracts away from the LEM surface 1201 resulting in a single membrane portion 1405 or wall section which defines part of the boundary of the larger bubble 1404. Presenting the low surface energy surface as a plurality of fine strands, typically as a mesh has the following advantages:

i) it provides an open, optionally immobile, structure which encourages bubble contact with the surface and encourages release of bubbles from the surface,
and
ii) it encourages the coalescence of small bubbles by taking advantage of the 'contact geometry'. Other LEMs are available but PTFE has been found to be very suitable for this application.

FIGs 8, 9 and 10 thus together show such a mechanism of LEM-based, or LEM-assisted, bubble coalescence. As suggested above, the process can be enhanced by the contact geometry, i.e. the geometry of the active surface which interfaces with the bubbles. Curving the LEM surface, as is achieved by a circular cross section of a mesh strand for example, allows a low angle of contact between the bubble's membrane and the surface, which acts to undermine even further the liquid bubble-to-bubble boundary, thus further weakening attachment of the bubbles to the low-energy surface.

The concept of separation by LEM-assisted bubble coalescence and gas-liquid phase segregation will now be described in more detail.

Gas-liquid separation involving LEM materials can be regarded as a two-stage process. As explained above, LEM materials accelerate or promote foam collapse by enhanced or increased bubble coalescence or merging, effectively causing bubble collapse. However, this process alone does not separate gas from liquid; it merely transforms a fine 2-phase flow (containing small bubbles) into a coarse 2-phase flow (containing larger bubbles). That is to say, the process makes small bubbles into larger bubbles.

A further phase 'segregation' stage, using gravity or centrifugal force, can bring about true, or complete, separation (by using a segregator apparatus such as a settling chamber, cyclone, helix, etc.)

LEM-assisted coalescence prior to phase segregation by gravity or centrifugal force has an advantageous technical effect that segregation is achieved, overall, more easily and this allows the use of segregation apparatus or 'plant' which is smaller and consumes less energy. Hence, LEM-assisted gas-liquid separation is envisaged by the inventors as a two stage process involving, i) (enhanced) coalescence and, ii) phase segregation.

Also, as mentioned earlier herein, phase segregation apparatus for foam destruction/segregation, such as a cyclone or helix, can be improved by lining the interior surface of the phase segregation apparatus with expanded mesh, as will be explained further below (see Table 2 on the next page for test results).

**Table 2**

| Configuration | Mesh Materials | | Volume mL | DeltaP, mbar | Foam Destruction % |
|---|---|---|---|---|---|
| | **Primary** | **Secondary** | | | |
| **Cyclone Enhancement** | | | | | |
| Cyclone | None | | 1770 | 0 | 0 |
| Cyclone (mesh lined) | ET8300 | | 1770 | 0 | 25 |
| **Primary - Radial Pleats** | | | | | |
| 8 pleats | ET8300 | None | 314 | 93 | 93 |

(continued)

| Primary - Parallel Pleats | | | | | |
|---|---|---|---|---|---|
| 9 pleats (x4 elements) | ET8300 | None | 200 | 63 | 95 |
| Primary - Parallel Streamers | | | | | |
| x7 Streamers (x1 element) | ET8300 | None | 100 | 38 | 73 |
| x7 Streamers (x2 element) | ET8300 | None | 200 | 73 | 94 |
| x5 Streamers (x2 elements) | PTFEKM220 01 | None | 226 | 68 | 91 |
| x7 Streamers (x1 element) | 5PTFE7-100ST | None | 100 | 60 | 83 |
| x7 Streamers (x2 element | 5PTFE7-100ST | None | 200 | 76 | 97 |
| Secondary | | | | | |
| x7 Screens | None | PTFEKM2200 1 | 4500 | 8 | 95 |
| x7 Screens | None | ET8300 | 4500 | 0 | ~100 |
| x7 Screens | None | 5PTFE7-100ST | 4500 | 8 | ~100 |
| Primary and Secondary | | | | | |
| x7 Streamers (x1 element) & x7 Screens | ET8300 | 5PTFE7-100ST | 4600 | 53 | ~100 |
| x7 Streamers (x2 element) & x7 Screens | ET8300 | 5PTFE7-100ST | 4700 | 78 | ~100 |

The concept of primary and secondary bubble coalescence will now be explained.

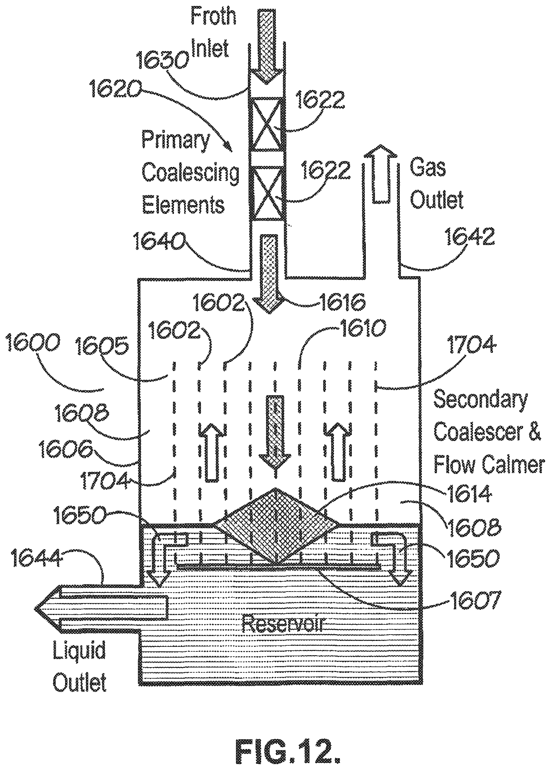

Investigation by the inventors has led to the development of primary and secondary LEM bubble coalescing devices or coalescers (see FIG. 12). A coalescer may be termed a 'Bubble Catching device' or 'Bubble Trap(ping) device'.

*Primary Coalescer apparatus*

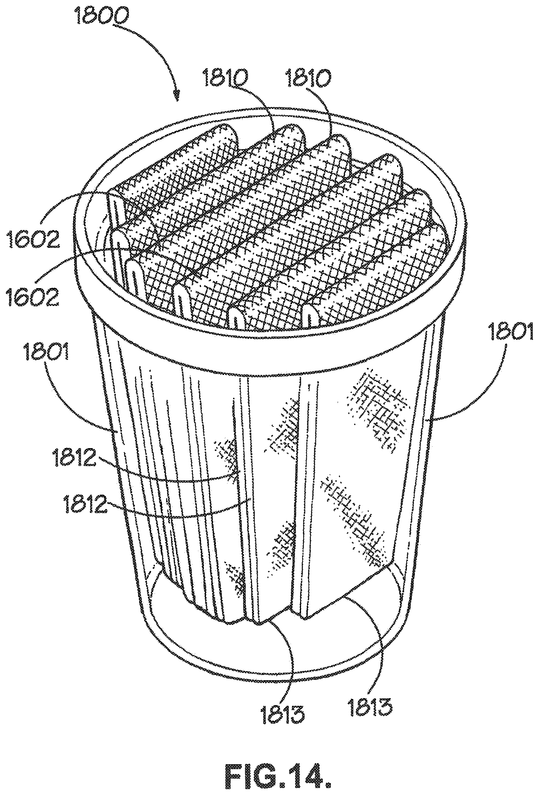

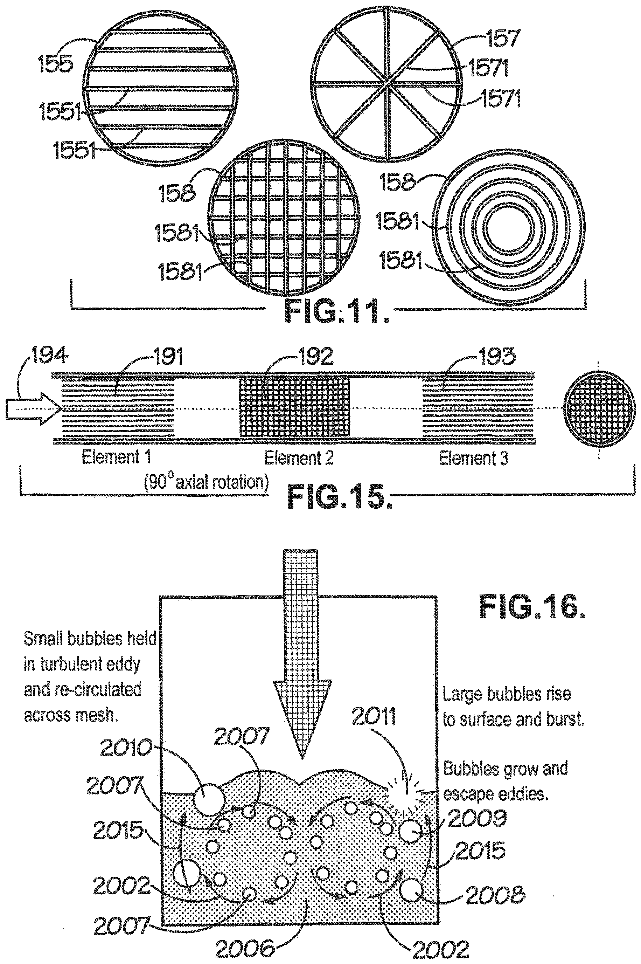

The primary coalescer device or apparatus can be mounted within a pipe downstream from the gas-liquid contactor of a fuel cell system. Examples are shown in FIGs 11, 14 and 15 and are described further below. The primary coalescer device can be placed upstream of a secondary coalescer device or apparatus, as illustrated in FIG. 12 and described further below.

The primary coalescer device comprises multiple (typically mesh) surfaces mounted at least partially parallel to the flow stream. This arrangement has the following advantages:

i) it minimises impedance of the flow stream (i.e. it provides lower pressure drop and lower energy consumption) due to the parallel mounting of the surfaces, and
ii) it takes advantage of crossflow shear action, in which the fluid courses, or is directed, across the low-energy surface, in a direction at least partially parallel to the surface of the LEM, in order to sweep or drag larger coalesced bubbles from the active surface of the LEM.

Coursing, or directing, the fluid flow across the surface, as described above, enables exposure or contact of the incoming finer bubbles with the surface of the LEM.

Without a shear action as described above, which acts to tear or drag the bubbles away from the surface, the only mechanism for bubble removal is buoyancy of the bubbles relative to the liquid, due to their lower density compared to that of the liquid.

If buoyancy is the only mechanism, the active surface becomes isolated from a significant portion of the bubbles by an established gas layer resulting from many coalesced bubbles forming a single volume of gas. As a result the process of gas-liquid separation or segregation is less effective.

In addition, crossflow shear action has also been observed to encourage bubbles to grow by coalescing, or merging, with one another in a 'snowball-like' fashion as they are swept downstream across the surface, which typically comprises a mesh structure.

Surfaces may be mounted across the pipe cross section in parallel to one another, or radially, and/or in pleats.

Other cross sectional arrangements may include a lattice or grid (of squares, honeycomb, circles, polygons, etc), concentric circles, a spiral or any other structure forming axial channels (see FIG 11 in which are shown a crossed or lattice arrangement 158 and a concentric arrangement 159).

FIG. 11 illustrates some example parallel (155) and radial (157) configurations. Each LEM surface 1551, 1571 may be secured in place along all its perimeter or edges, or the surface may only be secured along, or proximal to, its upstream portion e.g. local to its upstream edge, the trailing edge(s) being free, thereby allowing the surfaces, when they are made of flexible material, to behave 'streamer-like' in the flow field (see FIG. 12 to 14). This allows the surfaces a degree of mobility. Turbulence of the fluid flowing past the surfaces is thus able to disturb each streamer, improving contact and also improving bubble detachment.

The primary coalescer may be designed and arranged as a series of discrete 'elements' within a pipe. Each element would contain and support a suitable amount of LEM surface. If one element was found to be insufficient to coalesce a given flow or fineness of foam, then plural elements could be installed as required. FIG. 15 illustrates an example of a fluid pipe containing plural (three) such bubble-coalescing elements 191, 192 and 193 spaced along the direction of fluid flow 194. To improve contact, one element 192 could be mounted with an angle of axial rotation differing from one or more other element(s) 191, 193 so that the LEM surfaces of respective elements are rotationally offset from each other about the direction of fluid flow or the pipe main axis 194).

In FIG. 12, an example primary coalescing device 1620 comprises primary coalescing elements 1622 within a foam inlet pipe 1630 which inputs foam or froth to an example secondary coalescing apparatus 1600 having a secondary coalescer device 1605 within a reservoir 1606 for containing gas and liquid phases, a foam input 1640 for inputting foam from the pipe to the secondary coalescing device 1605, a gas outlet 1642 and a liquid outlet 1644. Orientation of the pipe holding the primary coalescing elements could be horizontal, vertical or angled between horizontal and vertical with flow conveyed in any direction.

*Secondary Coalescer*

The example secondary coalescer device 1605 or 'Bubble Trap' is mounted within the reservoir 1606 and receives return (fluid) flow via the primary device 1620. The main purposes of the secondary coalescer device 1605 are

i) to contain and coalesce any bubbles escaping the primary device and,

ii) to calm the incoming flow stream, thus containing and destroying any re-entrainment.

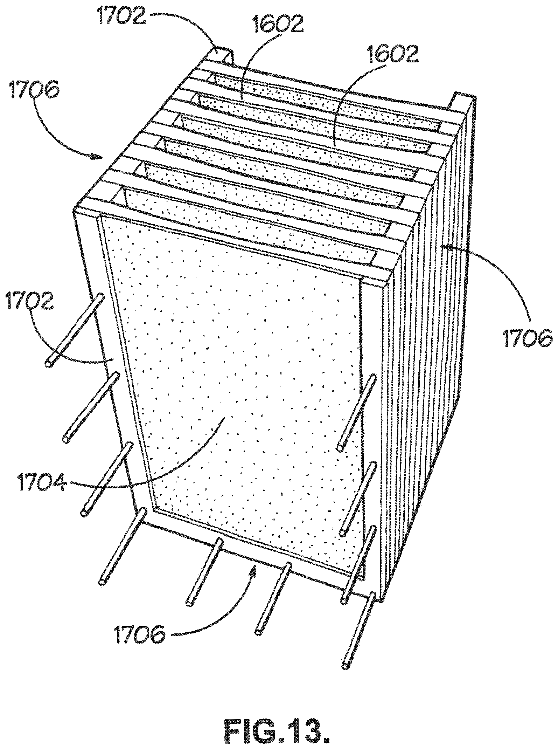

The example secondary coalescer device 1605 is illustrated in both FIGs 12 and 13. The device 1605 consists of a rack 1605 comprising an array of vertical mesh screens 1602 alongside one another, each screen held and sealed along, or proximal to, at least part of its perimeter, e.g. along its side and lower edges (as shown in FIG. 13), within a rack mounting 1702, the device 1605 being shown in FIG. 12 within the fluid reservoir 1606 of the secondary coalescing apparatus 1600. The rack 1605 is open at its input (upper, as shown) end or roof and at least one of the outer faces 1704 of the rack 1605 is parallel to the mesh screens 1602, other faces 1706 being impermeable to fluid flow. Fluid flow enters the array of screens as a downwardly flowing jet 1616 from above the secondary apparatus 1600 and from above device 1605. As the flow drains laterally through the screens 1602, the gas within the gas-liquid fluid mixture 1608, within the reservoir 1606, disengages and the liquid within the gas-liquid fluid mixture 1608 eventually exits via the open rack face(s) 1704. FIG.s 12 and 13 together serve to illustrate this arrangement. A useful feature, shown in the example coalescer of FIGs 12 and 13, is that each screen can be supported along, or proximal to, its upper or leading perimeter or edge(s) 1610 so as to resist deformation by the downward jetting flow of the fluid which is input to the secondary coalesce, indicated by arrow 1616.

The rack 1605 of the example arrangement shown in FIG. 12 has screens that are attached, at their lower edges (towards the liquid output end of the apparatus 1600), to a liquid- and gas-impermeable closed surface or plate 1607 which prevents liquid within foam 1614, between adjacent screens 1602, from exiting the rack 1605 downwards towards the liquid output end (lower end in the figure) of the apparatus 1600, and helps to direct the liquid that has passed between the screens, laterally out from the rack 1605 and into the fluid surrounding the rack 1605, as indicated by arrows 1650.

In the embodiment illustrated in FIG. 12, in addition to bottom closed surface 1607, rack side surfaces perpendicular to the screens are also impermeable to flow. Screen edges are, in this embodiment, sealed along these surfaces, thus encouraging liquid flow through the screen material from one side of the screen to the opposite side of the screen. The rack 1605 shown in FIG. 12 represents the rack shown in fig.13, in cross section, viewed in a direction parallel to the screen surfaces.

There are at least three mechanisms for this very effective means of foam destruction.

First according to a first mechanism, as described for the primary coalescer, foam destruction begins during its initial passages into the screen array as it moves or courses across the LEM screen surface beneath the inlet 1640 (the flow direction of foam being downward as shown by arrow 1616 in FIG. 12).

Secondly, the screens 1602 of the secondary coalescer device 1605 inhibit any surviving froth from advancing laterally with respect to the main fluid flow direction (indicated by arrow 1616 in FIG. 12).

De-gassed liquid is allowed to drain through apertures of the screens 1602. However, bubbles larger than these apertures are prevented from passing through the apertures (typically mesh) and are detained or held up until they are collapsed or burst.

Bubbles smaller than the apertures can pass though the apertures with the liquid. However, most of the bubbles are prevented from reaching the screen surface by the detained larger bubbles. This can be considered as advantageous in that, in effect, the screen or mesh acts like a bubble filter with the retention of smaller bubbles (within the regions between adjacent screens) being assisted by a 'filter cake' of larger bubbles in a region between the region containing the smaller bubbles and the surface of the screen facing that region (not illustrated).

A third mechanism may arise due to a flow field existing beneath the fluid-plunging inlet of the secondary coalesce device.

FIG. 16 illustrates this. Re-circulation eddies 2002 form as the inflowing fluid foam 2004 plunges into a mesh array 2006. Due to their size, small bubbles 2007 become trapped within these eddies 2002 and are thus repeatedly recirculated (as shown by the circular arrows 2002) and re-exposed to the surface of the mesh array 2006. Hence, the small bubbles 2007 are selectively retained and re-worked until they are sufficiently large (shown by bubble 2008) that their buoyancy allows them to escape to the surface (as shown by arrows 2015 and bubbles 2009, 2010) where the large bubbles 2008, 2010 burst or break (collapse) as indicated by bursting bubble 2011.

It is envisaged that the combination of these three mechanisms makes the LEM bubble trap very effective, test results indicating this effectiveness.

Without the presence of a secondary coalescing device or 'Bubble Trap', gravity separation (by upward floating movement of buoyant bubbles within, and relative to, the liquid) would be the only mechanism available to facilitate (a) the destruction/containment of residual foam and (b) gas re-entrainment in the liquid fluid. If such gravity separation is the only mechanism, the gas-liquid segregation reservoir would therefore need to be much larger than if the secondary coalescing device is used. Clearly, the secondary coalescing device provides for use of a smaller reservoir for a given fluid flow rate and a given .

In addition to primary and secondary coalescer stages as described above, the gas-liquid separator system could also be arranged with primary and secondary gas-liquid segregation stages.

For example, following the primary coalescer, gas-liquid mixed fluid flow could be directed to a cyclone or helix or other bulk separator to facilitate bulk segregation of the gas phase from the liquid phase. Liquid (and any residual foam) discharging from the bulk separator liquid output (e.g. cyclone base or helix output) could then be directed to a secondary coalescer bubble trap. Gravity settling within the gas-liquid reservoir would then facilitate secondary segregation.

The advantages of such an arrangement may become apparent on higher-power systems employing high flow rates and/or high flow velocities. Separation by staged coalescence and segregation would allow flow velocities to be gradually reduced before return of the fluid to the reservoir. This would further promote calming of flow and would avoid secondary entrainment to the gas and liquid outlets respectively.

Testing of LEM mesh materials, carried out by the inventors, will now be described.

A range of LEM meshes and surfaces have been investigated by the inventors in order to determine their effectiveness. Results are given in Table 3 below. Knitted Mesh PTFEKM22001 and Expanded Meshes ET-8300 and 5PTFE7-100ST were selected for testing and were found to give good performance.

**Table 3**

| Material | Supplier |
|---|---|
| PTFE Felt (PTFENF18005) | Textile Development Associates, Inc., USA |
| PTFE Expanded Mesh (ET-8300) | Industrial Netting, USA |
| PTFE Expanded Mesh (ET-8700) | Industrial Netting, USA |
| PTFE Expanded Mesh (ET-9000) | Industrial Netting, USA |
| PTFE Knitted Mesh (PTFEKM22003) | Development Associates, Inc., USA |
| PTFE Knitted Mesh (PTFEKM22005) | Textile Development Associates, Inc., USA |
| PTFE Solid Sheet | theplasticshop.co.uk |

(continued)

| Material | Supplier |
|---|---|
| PTFE Knitted Mesh (PTFEKM22001) | Textile Development Associates, Inc. , USA |
| PTFE Expanded Mesh (5PTFE7-100ST) | Dexmet Inc., USA |
| PTFE Expanded Mesh (5PTFE9-077ST) | Dexmet Inc. |
| PTFE Expanded Mesh (5PTFE6-050ST) | Dexmet Inc. |
| PTFE Expanded Mesh (15PTFE16-077ST) | Dexmet Inc. |
| PTFE Expanded Mesh (10PTFE20-100DBST) | Dexmet Inc. |

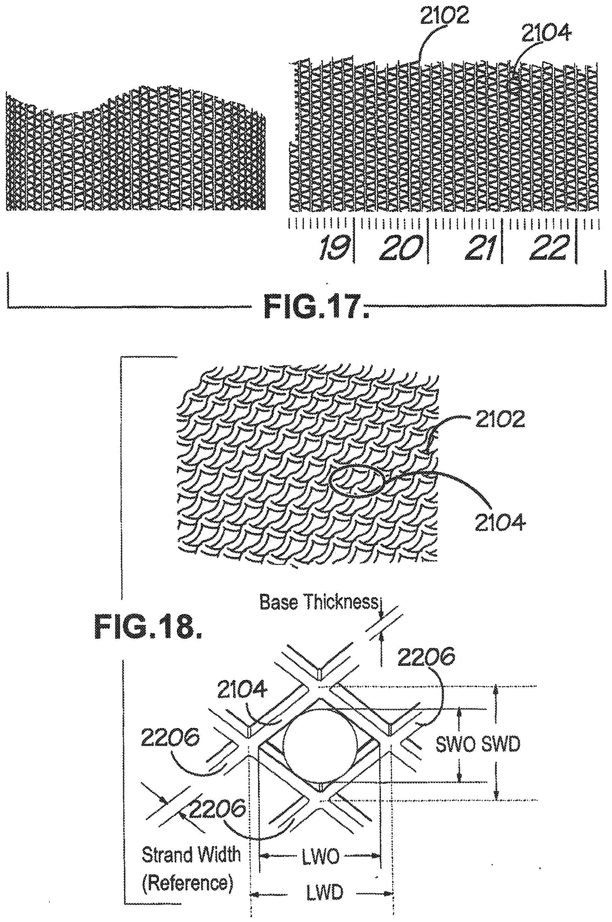

Images of knitted mesh PTFEKM22001 (originally developed for surgical applications) are shown in FIG. 17 and another mesh is shown in FIG. 18. In the figures, expanded mesh 2102 consists of a single sheet 2102 of material which has been formed (e.g. machined or moulded) with regular diamond shaped apertures 2104. The end result is a continuous and consistent, 'lint-free' mesh of interconnected fine strands 2206 which will not shed (come away from the mesh) when cut (unlike knitted or woven meshes which can release severed strand ends into the flow stream). FIG. 18 and Table 4, below, together present the form and dimensions of the expanded mesh.

**Table 4**

| Material | LWD, mm | SWD, mm | Thickness, mm | Strand width, mm | Nominal Aperture, mm | |
|---|---|---|---|---|---|---|
| | | | | | Long axis | Short Axis |
| ET8300 | 1.91 | 1.22 | 0.46 | 0.36 | 1.14 | 0.64 |
| 5PTFE7-100ST | 2.54 | 0.99 | 0.13 | 0.18 | 1.80 | 0.66 |

As the process of LEM-assisted bubble coalescence is a surface phenomenon (i.e. it occurs at a surface), self supporting meshes could be fabricated with a rigid substructure (e.g. wire mesh coated with PTFE). External supporting structures (e.g. racks, frames, supporting ribs, etc.) take up volume, are intrusive to flow and thus contribute to pressure drop along the fluid flow direction. An internal supporting structure would avoid these problematic issues.

Primary and secondary coalescer devices, as described above, were developed by the inventors though a program of testing and development. Devices were tested downstream of a foam generator. Unless otherwise stated, applied fluid flows were 30 L/min (0.5 litres per second) catholyte and 120 L/min (2 litres per second) air at room temperature (around 20 degrees Celsius). *Table 4* summarises each prototype design and performance.

*Mist Prevention*

During tests, the above described devices were also found to generate much less catholyte mist carryover to the gas exhaust (i.e. less droplets escaping with exiting or output gas). Results of the tests indicate that it is possible, by use of the invention, to obtain two orders of magnitude improvement over conventional gravity and centrifugal foam separation devices (i.e. settling chamber, cyclones, helix etc.)

*Explanation for LEM mist Prevention*

The following provides a proposed explanation of why a LEM-based gas-liquid separator, examples of which are described above, releases significantly less catholyte mist to the exhaust stream than by gravity or centrifugal based techniques.

*Gravity and Centrifugal based Gas-Liquid Separation*

Settling chambers, cyclones and helices all exploit differences in phase density to achieve gas-liquid separation and thereby foam collapse. Gravity or centrifugal force is used to induce liquid drainage via the foam's interconnected network of bubble membranes. As a result, bubbles at the foam surface become liquid starved, leading to membrane thinning and therefore weakening. Eventually the weaken membranes rupture under the influence of surface tension. Liquid surface tension then draws the collapsing membrane films into spherical droplets. These become entrained within the separating gas stream and exit the system via the gas exhaust output as mist. This is udesirable. A new surface layer of bubbles is consequently revealed on the upper surface of the froth or foam and the process repeats.

*LEM Based Gas-Liquid Separation, compared with Gravity and Centrifugal based Gas-Liquid Separation*

Due to the hydrophobic nature of PTFE or other low-surface energy material, each liquid bubble membrane contacts the low-energy surface with a 'low' contact angle. That is, the outer surface of the bubble's membrane is repelled by the hydrophobic surface and therefore, when the bubble contacts the surface, its membrane becomes angled away more from the surface outwardly from the central point of contact of the bubble with the surface, than if the surface were made of a higher-surface energy material. In other words, the surface of the bubble membrane, in the region of contact of the membrane with the surface, is more outwardly convex than it would be if the surface were made of a higher-surface energy material.

This 'low' contact angle acts to undermine and locally thin the membrane at the point of contact, leading to weak surface adhesion. Inherent membrane surface tensions then become sufficient to tear or drag the liquid film membrane away from the PTFE surface and thereby remove the bubble from the surface. As each membrane retracts, liquid, contained within the membrane, flows into surrounding films of one or more other bubbles and two bubbles are coalesced into one. See FIGs 8 to 10 consecutively.

According to the above-described process of destruction or coalescence of bubbles by means of low-surface energy material, in a general sense the bubble membranes are not weakened by drainage of the liquid, the integrity of the membranes is maintained as the membranes retract and as such, each membrane is much less likely to disintegrate into droplets. That said, even if some droplets are created anyway, despite this maintained integrity of the membranes, the formation of such droplets would occur as a double encapsulation (i.e. droplet contained within surviving bubbles) and would occur beneath a blanket or region of foam. This provides opportunity for re-absorption of the droplets thus preventing the droplets from being released to the gas output or exhaust.

**Claims**

1.  A gas-liquid separator system for a fuel cell, the system comprising:
    a coalescer apparatus (1605), the coalescer apparatus comprising:

    an opening (1640) arranged to receive a flow of fluid (1616);
    an array of screens (1602) arranged substantially parallel to the direction of fluid flow, wherein the screens (1602) are attached at each of their ends opposite the opening (1640) to an impermeable surface (1607) such that fluid is prevented from flowing through the impermeable surface (1607) and is directed through the screens (1602);

    the system further comprising a reservoir (1606) for containing gas and liquid phases of the fluid, wherein the reservoir (1606) is arranged to receive fluid from the coalescer apparatus (1605).

2.  A system according to claim 1, wherein each screen (1602) of the array is sealed along at least a part of its perimeter.

3.  A system according to claim 1 or 2, wherein the array of screens (1602) is held in a rack; and optionally wherein the side surfaces of the rack are impermeable to encourage fluid to flow though the screens (1602).

4.  A system according to any one of the preceding claims, wherein each screen (1602) is supported along or proximal to its leading edge.

5.  A system according to any one of the preceding claims, wherein the screens (1602) comprise a hydrophobic material.

6.  A system according to any one of the preceding claims, wherein the screens (1602) comprise mesh.

7.  A system according to any one of the preceding claims, wherein the coalescer apparatus (1605) is mounted within the reservoir (1606).

8.  A system according to any one of the preceding claims, wherein the coalescer apparatus (1605) comprises a secondary coalescer apparatus, the system further comprising a primary coalescer apparatus (1622) located upstream of the secondary coalescer apparatus (1605).

9.  A system according to claim 8, wherein the primary coalescer apparatus (1622) comprises at least one hydrophobic surface (1551, 1571) arranged to contact the fluid; and optionally
    wherein the hydrophobic surface (1551, 1571) is oriented at least partially parallel to a direction of fluid flow.

10. A system according to claim 9, wherein the hydrophobic surface (1551, 1571) is made from a flexible material, the flexible material being held at or proximal to its upstream end so as to inhibit movement of its upstream end whilst permitting movement of a portion of the surface distal from its upstream end.

11. A system according to claim 9 or 10, wherein the primary coalescer apparatus (1622) comprises a plurality of hydrophobic surfaces (1551, 1571).

12. A system according to claim 11, wherein the plurality of surfaces (1551, 1571) are held in position proximal to one another so that they are at least partly parallel to one another and to the direction of fluid flow at their respective upstream ends; and optionally

    wherein the plurality of surfaces (1551, 1571) are held in position so that they are spaced apart from one another in a direction transversal to the primary direction of fluid flow; or optionally
    wherein each of the plurality of surfaces (1551, 1571) is secured proximal to its upstream portion or along its entire edge along an axis at least partly parallel to the direction of fluid flow and held in position so that they each extend from said axis radially outward from said axis, or so that they are spaced apart in each of two directions transversal to said axis, or so that they are spaced from each other concentrically around said axis.

13. A system according to any one of claims 8 to 12, wherein the hydrophobic surface (1551, 1571) comprises a mesh.

14. A system according to any one of claims 8 to 13, wherein the system comprises a plurality of primary coalescer apparatuses (1622); and optionally
    wherein at least one of the primary coalescer apparatuses (1622) is mounted with an angle of axial rotation differing from one or more of the other primary coalescer apparatuses (1622).

15. A system according to any one of claims 8 to 14, further comprising a gas-liquid segregation stage; and optionally

    wherein the gas-liquid segregation stage comprises a cyclone or a helix; and/or optionally
    wherein the gas-liquid segregation stage is located between the primary (1622) and secondary (1605) coalescer apparatuses.

**Patentansprüche**

1.  Gas-Flüssig-Trennsystem für eine Brennstoffzelle, wobei das System Folgendes umfasst:
    eine Koaleszervorrichtung (1605), wobei die Koaleszervorrichtung Folgendes umfasst:

    eine Öffnung (1640), die zur Aufnahme eines Flüssigkeitsflusses (1616) angeordnet ist;
    eine Reihe von Sieben (1602), die im Wesentlichen parallel zu der Richtung des Flüssigkeitsflusses angeordnet sind, wobei die Siebe (1602) an jedem von ihren Enden gegenüber der Öffnung (1640) an einer undurchlässigen Oberfläche (1607) angebracht sind, sodass verhindert wird, dass Flüssigkeit durch die undurchlässige Oberfläche 1607) fließt und durch die Siebe (1602) geleitet wird;

    wobei das System weiter ein Sammelbecken (1606) für das Enthalten von Gas- und Flüssigphasen der Flüssigkeit umfasst, wobei das Sammelbecken (1606) zur Aufnahme von Flüssigkeit aus der Koaleszervorrichtung (1605) angeordnet ist.

2.  System nach Anspruch 1, wobei jedes Sieb (1602) der Reihe entlang mindestens eines Teils seines Umfangs abgedichtet ist.

3.  System nach Anspruch 1 oder 2, wobei die Reihe von Sieben (1602) in einem Gestell gehalten wird und optional wobei die Seitenoberflächen des Gestells undurchlässig sind, um den Fluss der Flüssigkeit durch die Siebe (1602) zu begünstigen.

**4.** System nach einem der vorstehenden Ansprüche, wobei jedes Sieb (1602) entlang oder proximal seiner Vorderkante gestützt wird.

**5.** System nach einem der vorstehenden Ansprüche, wobei die Siebe (1602) ein hydrophobes Material umfassen.

**6.** System nach einem der vorstehenden Ansprüche, wobei die Siebe (1602) Netz umfassen.

**7.** System nach einem der vorstehenden Ansprüche, wobei die Koaleszervorrichtung (1605) innerhalb des Sammelbeckens (1606) angebracht ist.

**8.** System nach einem der vorstehenden Ansprüche, wobei die Koaleszervorrichtung (1605) eine sekundäre Koaleszervorrichtung umfasst, wobei das System weiter eine primäre Koaleszervorrichtung (1622) umfasst, die sich vorgelagert vor der sekundären Koaleszervorrichtung (1605) befindet.

**9.** System nach Anspruch 8, wobei die primäre Koaleszervorrichtung (1622) mindestens eine hydrophobe Oberfläche (1551, 1571) umfasst, die zum Kontakt mit der Flüssigkeit angeordnet ist; und optional
wobei die hydrophobe Oberfläche (1551, 1571) zumindest teilweise parallel zu einer Richtung des Flüssigkeitsflusses ausgerichtet ist.

**10.** System nach Anspruch 9, wobei die hydrophobe Oberfläche (1551, 1571) aus einem flexiblen Material hergestellt ist, wobei das flexible Material an oder proximal zu seinem vorgelagerten Ende gehalten wird, sodass eine Bewegung seines vorgelagerten Endes unterbunden wird, während eine Bewegung eines Teils der Oberfläche distal von seinem vorgelagerten Ende ermöglicht wird.

**11.** System nach Anspruch 9 oder 10, wobei die primäre Koaleszervorrichtung (1622) eine Vielzahl von hydrophoben Oberflächen (1551, 1571) umfasst.

**12.** System nach Anspruch 11, wobei die Vielzahl von Oberflächen (1551, 1571) proximal zueinander in Position gehalten werden, sodass sie zumindest teilweise parallel zueinander und zu der Richtung des Flüssigkeitsflusses an ihren jeweiligen vorgelagerten Enden vorliegen; und optional
wobei die Vielzahl von Oberflächen (1551, 1571) in Position gehalten werden, sodass sie voneinander in einer Richtung quer zu der primären Richtung des Flüssigkeitsflusses beabstandet sind; oder optional
wobei jede der Vielzahl von Oberflächen (1551, 1571) proximal zu ihrem vorgelagerten Teil oder entlang ihres gesamten Rands entlang einer Achse zumindest teilweise parallel zu der Richtung des Flüssigkeitsflusses befestigt ist und in Position gehalten wird, sodass sie sich jeweils von der Achse radial nach außen von der Achse erstrecken oder sodass sie in jeder der zwei Richtungen quer zu der Achse beabstandet sind oder sodass sie konzentrisch um die Achse voneinander beabstandet sind.

**13.** System nach einem der Ansprüche 8 bis 12, wobei die hydrophobe Oberfläche (1551, 1571) ein Netz umfasst.

**14.** System nach einem der Ansprüche 8 bis 13, wobei das System eine Vielzahl von primären Koaleszervorrichtungen (1622) umfasst; und optional
wobei mindestens eine der primären Koaleszervorrichtungen (1622) mit einem Winkel der axialen Rotation angebracht ist, der sich von einem oder mehreren der anderen primären Koaleszervorrichtungen (1622) unterscheidet.

**15.** System nach einem der Ansprüche 8 bis 14, das weiter eine Gas-Flüssig-Segregationsphase umfasst und optional
wobei die Gas-Flüssig-Segregationsphase einen Zyklon oder eine Helix umfasst; und/oder optional
wobei sich die Gas-Flüssig-Segregationsphase zwischen den primären (1622) und sekundären (1605) Koaleszervorrichtungen befindet.

**Revendications**

**1.** Système de séparation gaz-liquide pour une pile à combustible, le système comprenant :

un appareil coalesceur (1605), l'appareil coalesceur comprenant :

une ouverture (1640) agencée pour recevoir un flux de fluide (1616) ;

un réseau de tamis (1602) agencé sensiblement parallèlement au sens d'écoulement du fluide, dans lequel les tamis (1602) sont attachés au niveau de chacune de leurs extrémités opposées à l'ouverture (1640) à une surface imperméable (1607) de telle sorte que le fluide ne puisse pas s'écouler à travers la surface imperméable (1607) et soit dirigé à travers les tamis (1602) ;

le système comprenant en outre un réservoir (1606) destiné à renfermer des phases gazeuse et liquide du fluide, le réservoir (1606) étant agencé pour recevoir le fluide provenant de l'appareil coalesceur (1605).

**2.** Système selon la revendication 1, dans lequel chaque tamis (1602) du réseau est scellé le long d'au moins une partie de son périmètre.

**3.** Système selon la revendication 1 ou 2, dans lequel le réseau de tamis (1602) est maintenu dans une baie; et facultativement
dans lequel les surfaces latérales de la baie sont imperméables pour encourager le fluide à s'écouler à travers les tamis (1602).

**4.** Système selon l'une quelconque des revendications précédentes, dans lequel chaque tamis (1602) est supporté le long ou près de son bord avant.

**5.** Système selon l'une quelconque des revendications précédentes, dans lequel les tamis (1602) comprennent un matériau hydrophobe.

**6.** Système selon l'une quelconque des revendications précédentes, dans lequel les tamis (1602) comprennent un maillage.

**7.** Système selon l'une quelconque des revendications précédentes, dans lequel l'appareil coalesceur (1605) est monté au sein du réservoir (1606).

**8.** Système selon l'une quelconque des revendications précédentes, dans lequel l'appareil coalesceur (1605) comprend un appareil coalesceur secondaire, le système comprenant en outre un appareil coalesceur primaire (1622) placé en amont de l'appareil coalesceur secondaire (1605).

**9.** Système selon la revendication 8, dans lequel l'appareil coalesceur primaire (1622) comprend au moins une surface hydrophobe (1551, 1571) agencée pour faire contact avec le fluide ; et facultativement
dans lequel la surface hydrophobe (1551, 1571) est orientée au moins partiellement parallèlement à un sens d'écoulement du fluide.

**10.** Système selon la revendication 9, dans lequel la surface hydrophobe (1551, 1571) est réalisée en un matériau souple, le matériau souple étant maintenu au niveau de son extrémité amont ou près de celle-ci de manière à empêcher le mouvement de son extrémité amont tout en permettant le mouvement d'une partie de la surface distale à son extrémité amont.

**11.** Système selon la revendication 9 ou 10, dans lequel l'appareil coalesceur primaire (1622) comprend une pluralité de surfaces hydrophobes (1551, 1571).

**12.** Système selon la revendication 11, dans lequel les surfaces de la pluralité de surfaces (1551, 1571) sont maintenues à des positions proximales les unes aux autres de manière à être au moins partiellement parallèles les unes aux autres et au sens d'écoulement du fluide au niveau de leurs extrémités amonts respectives ; et facultativement
dans lequel les surfaces de la pluralité de surfaces (1551, 1571) sont maintenues en place de manière à être espacées les unes des autres dans un sens transversal au sens primaire d'écoulement du fluide ; ou facultativement
dans lequel chacune de la pluralité de surfaces (1551, 1571) est assujettie près de sa partie amont ou le long de tout son bord le long d'un axe au moins partiellement parallèlement au sens d'écoulement du fluide et maintenue en position de manière à ce qu'elles s'étendent chacune depuis ledit axe radialement vers l'extérieur dudit axe, ou de telle sorte qu'elles soient espacées dans chacun de deux sens transversaux audit axe, ou de telle sorte qu'elles soient espacées les unes des autres concentriquement autour dudit axe.

**13.** Système selon l'une quelconque des revendications 8 à 12, dans lequel la surface hydrophobe (1551, 1571) comprend un maillage.

**14.** Système selon l'une quelconque des revendications 8 à 13, le système comprenant une pluralité d'appareils coalesceurs primaires (1622), et facultativement
dans lequel au moins un des appareils coalesceurs primaires (1622) est monté avec un angle de rotation axiale différent de celui d'un ou de plusieurs des autres appareils coalesceurs primaires (1622).

**15.** Système selon l'une quelconque des revendications 8 à 14, comprenant en outre un étage de ségrégation gaz-liquide ; et facultativement
dans lequel l'étage de ségrégation gaz-liquide comprend un cyclone ou une hélice ; et/ou facultativement
dans lequel l'étage de ségrégation gaz-liquide est situé entre les appareils coalesceurs primaires (1622) et secondaire (1605).

FIG.1.

FIG.2A.

FIG.2B.

FIG.2C.

FIG.2D.

**FIG.3.**

**FIG.4.**

FIG.5.

**FIG.6.**

**FIG.7.**

**FIG.8.**

Weak attachment allows surface tension to tear bubble
membrane from low energy surface.
As integrity is not undermined by drainage, membrane does not
disintergrate into droplets but withdraws intact.

**FIG.9.**

'Mistless' coalescence achieved !

FIG.10.

**FIG.12.**

**FIG.13.**

**FIG.14.**

155
1551
1551

157
1571
1571

158
1581
1581

158
1581
1581

**FIG.11.**

194
191
192
193

Element 1
Element 2
Element 3

(90° axial rotation)

**FIG.15.**

**FIG.16.**

Small bubbles held in turbulent eddy and re-circulated across mesh.

Large bubbles rise to surface and burst.

2011

2007

Bubbles grow and escape eddies.

2010

2009

2007

2015

2015

2002

2008

2007

2006

2002

27

**FIG.17.**

**FIG.18.**

**EP 3 138 617 B1**

**Patent documents cited in the description**

- GB 1201246 A
- DE 10323155 A1
- US 20060288870 A1
- US 20050247198 A1
- US 1718013 A
- US 3283477 A
- US 20070231657 A